# EUROPÄISCHE PATENTSCHRIFT

(11) **EP 2 908 705 B1**
(45) Veröffentlichungstag und Bekanntmachung des Hinweises auf die Patenterteilung: **22.02.2017**
(21) Anmeldenummer: 13779810.4
(22) Anmeldetag: 18.10.2013
(51) Int. Cl.: A47J 27/08, A47J 27/14, A47J 36/06, A47J 36/12, A47J 27/00, A47J 37/12

(54) **GARGERÄT**
COOKING DEVICE
APPAREIL DE CUISSON

(30) Priorität: 19.10.2012 DE 102012020631
(43) Veröffentlichungstag der Anmeldung: 26.08.2015
(73) Patentinhaber: FRIMA-T SAS, 68270 Wittenheim (FR); FRIMA International AG, 9435 Heerbrugg (CH)
(72) Erfinder: WASSMUS, Reinhard, 79395 Neuenburg (DE); LINGENHEIL, Markus, 79206 Breisach/Oberrimsingen (DE); GLUCK, Pascal, 68390 Sausheim (FR); SPAHLHOLZ, Kevin, 79415 Bad Bellingen/Bamlach (DE); VORADY, Jean, 68270 Wittenheim (FR); BAEHL, Manuel, 68850 Staffelfelden (FR)
(74) Vertreter: Prinz & Partner mbB
(86) Internationale Anmeldenummer: PCT/EP2013/071856
(87) Internationale Veröffentlichungsnummer: WO 2014/060583

(56) Entgegenhaltungen:
- DE-A1- 2 309 673
- DE-B- 1 157 148
- FR-A1- 2 608 033

## Beschreibung

Die Erfindung betrifft ein Gargerät, mit einem schwenkbaren, eine Tiegelschwenkachse aufweisenden Tiegel und einem schwenkbaren, eine Deckelschwenkachse aufweisenden Deckel.

Gargeräte mit einem schwenkbaren Tiegel werden auch als Kipper bezeichnet. Sie sind Allround-Geräte, in denen zum Beispiel erwärmt, gekocht, gebraten oder frittiert werden kann. Die Tiegel können nach vorne zum Bediener verschwenkt werden, um den Tiegel zu leeren. Nachdem die Tiegel gerade im befüllten Zustand schwer sind, erfolgt dieses Kippen üblicherweise durch einen Motor. Darüber hinaus sind die Tiegel durch einen schwenkbaren Deckel verschließbar, der manuell oder motorisch betätigt wird. Die Schwenkachse des Deckels ist dabei entfernt vom Tiegel am Gestell des Gargeräts vorgesehen und liegt üblicherweise im Bereich des oberen, dem Bediener entfernten Endes des Tiegels. Ein Beispiel für ein solches gattungsgemäßes Gargerät zeigt die DE 23 09 673 A1.

In der FR 2 608 033 A1 und der DE 11 57 148 B ist ein Gargerät mit eigenem Bodengestell bzw. Wandgestell offenbart, an dem einerseits der Deckel und andererseits der Tiegel voneinander unabhängig betätigbar sind.

Aufgabe der Erfindung ist es, ein funktionssicheres Gargerät mit dafür möglichst geringem Aufwand, aber komfortablen Funktionen zu schaffen.

Dies wird bei einem Gargerät der eingangs genannten Art dadurch erreicht, dass ein gemeinsamer Antrieb zum Verschwenken des Tiegels und des Deckels vorgesehen ist.

Durch den motorisch verschwenkbaren Deckel kann der Bediener des Gargeräts auf einfache Weise und vor allem schnell und ohne Kraftaufwand den Tiegel öffnen und schließen. Der singuläre Antrieb reduziert den Aufwand und die Kosten für den motorischen Antrieb von Tiegel und Deckel erheblich gegenüber den bislang bekannten separat vom Tiegel motorisch bewegten Deckeln.

Im Stand der Technik ist es relativ aufwendig, die motorisch hervorgerufenen Bewegungen von Deckel und Tiegel abzustimmen, sodass es zu keiner Kollision von Tiegel und Deckel kommt. Beispielsweise darf der Deckel, falls motorisch betrieben, erst abgesenkt werden, wenn der Tiegel vorher seine Nullposition, das heißt seine Garstellung, erreicht hat. Umgekehrt sollte der Tiegel nur dann angehoben werden können, wenn der Deckel ausreichend oder vorher komplett geöffnet wurde.

Auch die Funktion eines Motors zum automatischen Absenken und Ausheben von Gargut in geeigneten Behältern, die am Deckel angebracht sind, kann dadurch realisiert werden. Das komplette Schließen des Deckels und das Öffnen können dabei auch händisch erfolgen.

Die Erfindung sieht vor, dass der Antrieb mit einem Mechanismus gekoppelt ist, der die Antriebsenergie zeitlich gestaffelt entweder in eine Bewegung des Tiegels oder des Deckels umsetzt.

Die Koppelung von Tiegel und Deckel über einen gemeinsamen Antrieb erlaubt eine relativ einfache, zum Teil rein mechanische Entkoppelung der Tiegel- und der Deckelbewegung, sodass es nicht zur Kollision von Tiegel und Deckel kommen kann.

Vorzugsweise sind mit der Tiegelschwenkachse und/oder der Deckelschwenkachse je ein Schwenkhebel drehfest verbunden, welcher bzw. welche mit dem Antrieb gekoppelt ist bzw. sind. Über den Schwenkhebel lassen sich relativ einfach hohe Drehmomente auf die Schwenkachse aufbringen, sodass die Leistung des Antriebs reduziert sein kann.

Die Tiegelschwenkachse und die Deckelschwenkachse können über ein Gestänge miteinander gekoppelt sein. Ein Gestänge ist eine einfache, robuste und vor allem kostengünstige Art, die Kraft des Antriebs auf die Schwenkachsen zu übertragen.

Der Antrieb ist gemäß der bevorzugten Ausführungsform in das Gestänge integriert und treibt es an.

Insbesondere ist der Antrieb ein Linearantrieb, zum Beispiel ein elektrischer Hubzylinder, wobei der Linearantrieb verschiedene Haltepositionen einnehmen kann. Ein solcher Linearantrieb ist zum einen kostengünstig realisierbar, zum anderen auch leicht seitlich neben dem Tiegel am oder im Gargerät unterzubringen.

Ferner kann der Linearantrieb so ausgeführt sein, dass er an beliebigen Haltepositionen gestoppt werden kann. Dies ist insbesondere einfach in Zusammenhang mit einem elektrischen Hubzylinder realisierbar.

Der Linearantrieb kann auch einen Gestängeabschnitt bilden, also zwei Gestängeabschnitte überbrückt, sodass er im direkten Kraftübertragungsweg von der Tiegelschwenkachse zur Deckelschwenkachse liegt. Auch hierdurch lässt sich Bauraum sparen.

Der Linearantrieb kann an seinen beiden axialen Enden an durch ihn verfahrbaren Lagern angekoppelt sein. Das bedeutet, der Linearantrieb ist "fliegend" zwischen den Lagern angeordnet und kann an beiden Enden die Lager verfahren, wobei ein Ende dem Tiegel und das andere Ende dem Deckel zugeordnet ist, sodass eine Bewegung des Tiegels bzw. des Deckels bei der jeweiligen Bewegung des Lagers hervorgerufen wird.

Trotz der zwei beweglichen Lager ist durch Einrichtungen zum Einschränken des Freiheitsgrades zumindest eines der beiden Lager, welches temporär wirkt, immer nur eines der beiden Lager in Bewegung. Damit wird sichergestellt, dass nur entweder Deckel oder entweder Tiegel bewegt werden und es zu keiner Kollision von Deckel und Tiegel kommen kann.

Die Einrichtung zum Einschränken des Freiheitsgrades zumindest eines Lagers ist beispielsweise ein erster Anschlag, der die Deckelschwenkbewegung beim Öffnen begrenzt und zum Beispiel am deckelseitigen axialen Ende des Linearantriebs angreift. Der erste Anschlag ist so zum Linearantrieb, insbesondere zum verfahrbaren Lager angeordnet, dass dieser Anschlag erst dann wirkt, wenn der Deckel ausgehend von der Schließstellung in die vollständig geöffnete Stellung verschwenkt ist. In dieser Öffnungsstellung verhindert der Anschlag eine weitere Bewegung des Linearantriebs in Richtung Deckel, das heißt ein weitergehendes Öffnen des Deckels. Ab Erreichen des ersten Anschlags wird das tiegelseitige axiale Ende des Linearantriebs verfahren, wodurch der Tiegel nach dem Öffnen des Deckels verschwenkt wird.

Die Erfindung sieht gemäß einer Ausgestaltung vor, dass der Deckel motorisch in die Schließstellung bewegt werden kann.

Die bevorzugte Ausführungsform der Erfindung schlägt vor, dass in der Ausgangsstellung, bei geschlossenem und/oder annähernd geschlossenem Deckel (abhängig davon, ob der Deckel motorisch ganz oder fast ganz in die Schließstellung oder bei einem am Deckel angebrachten Gargutkorb in die Gargutabsenkposition gebracht wird) und bei Tiegel in Garstellung kein starrer Anschlag für den Linearantrieb vorgesehen ist. Der Antrieb ist jedoch so zu den Schwenkachsen positioniert, insbesondere aufgrund der Hebelverhältnisse, dass aufgrund der höheren Gewichtskraft des Tiegels verglichen mit dem Deckel zuerst das deckelseitige Ende des Linearantrieb verfahren wird und das tiegelseitige Ende aufgrund der Gewichtskraft stehen bleibt.

Am deckelseitigen Ende des Linearantriebs kann eine Führung für den Linearantrieb vorgesehen sein, insbesondere wobei an den axialen Enden der Führung Anschläge positioniert oder ausgebildet sind, vorzugsweise starre Anschläge.

Die Führung kann auf sehr einfache Weise durch ein Langloch gebildet sein, in welchem ein antriebseitiger Fortsatz verfahrbar ist. Natürlich wäre es auch umgekehrt möglich, am Antrieb eine Nut oder ein Langloch vorzusehen, das längs eines lagefesten Fortsatzes verfährt.

Das Abschalten des Antriebs erfolgt normalerweise, gerade wenn es sich um einen elektrischen Antrieb handelt, nicht so abrupt, dass es keinen Nachlauf gibt. Vielmehr sind bei Antrieben nach Erreichen einer vorgegebenen Halteposition, insbesondere einer Endposition, Nachlaufstrecken üblich. Die Nachlaufstrecke erklärt sich unter anderem durch eine gewisse Schaltzeit des eingesetzten Schalters oder Sensors, sobald die vorgegebene Position des Tiegels oder des Deckels oder des Antriebs erreicht ist, durch die Schaltzeit der Steuerung sowie durch die Nachlaufzeit des Antriebs ab Erhalt des entsprechenden Steuersignals oder ab Stromunterbrechung. Um zu vermeiden, dass während des Nachlaufs des Antriebs der Deckel oder der Tiegel noch eine erwähnenswerte Schwenkbewegung macht, sieht die Erfindung vor, dass das Langloch an wenigstens einem Ende einen Nachlaufabschnitt besitzt. In diesem Nachlaufabschnitt bewegt sich der Fortsatz in der Nachlaufstrecke des Linearantriebs oder umgekehrt, sodass im übertragenen Sinne die Nachlaufstrecke des Antriebs nach dessen Abschalten in diesem Nachlaufabschnitt liegt. Der Nachlaufabschnitt des Langlochs hat einen das Langloch begrenzenden Rand in Form eines Kreisbogenabschnitts, dessen Mittelpunkt auf der gedachten Mittelachse der Deckelschwenkachse liegt. Das bedeutet, während des Nachlaufs gibt es keine Hubbewegung, denn der Fortsatz läuft auf einer Bahn, die einen Kreisbogenabschnitt um die Deckelschwenkachse beschreibt. Somit bleibt der Abstand des Fortsatzes während des Nachlaufs zur Deckelschwenkachse gleich. Das Langloch kann ein Ende haben, welches nach unten vertikal schräg oder gerade abfällt. Der Fortsatz liegt in diesem Bereich, wenn der Deckel hochgeschwenkt ist. Durch das abfallende Ende des Langlochs ergibt sich eine Senkbewegung des Fortsatzes und damit des Deckels bei Erreichen dieses abfallenden Endes oder Abschnitts des Langlochs. Um die Bewegung des Deckels nach unten zu minimieren, kann eine Dämpfungseinrichtung vorgesehen sein.

Eine Ausführungsform der Erfindung sieht vor, dass ein Gestänge zwischen den Schwenkachsen des Tiegels und des Deckels vorhanden ist, das durch den Antrieb bewegt wird. Dieses Gestänge ist so ausgeführt, dass es in keiner Stellung von Tiegel und Deckel komplett linear verläuft, sondern immer einen Knick aufweist.

Gemäß einer Ausführungsform liegt der Knick in dem Gestänge am Koppelpunkt von Linearantrieb und demjenigen Teil des Gestänges, der vom Linearantrieb zur Deckelschwenkachse hin verläuft.

Die vorgenannte Dämpfungseinrichtung kann zum Beispiel im Bereich des Knicks des Gestänges vorhanden sein.

Die bevorzugte Ausführungsform sieht vor, dass am Ende der Bewegungsstrecke oder an beiden Enden, das heißt ab Erreichen von Endpositionen, elektrische Schaltelemente, zum Beispiel elektrische Mikroschalter, Näherungsschalter, Reedschalter oder Hallkontaktschalter oder dergleichen vorhanden sind, die das Erreichen dieser Stellung detektieren. Damit kann über die Steuerung und/oder rein elektrisch der Antrieb angesteuert werden.

Eine weitere, gegebenenfalls zusätzliche oder alternative Möglichkeit, die Nachlaufstrecke klein zu halten oder gänzlich zu vermeiden, besteht darin, eine elektrische Bremseinrichtung vorzusehen, zum Abbremsen des Antriebs ab Erreichen wenigstens einer vorgegebenen Position des Antriebs oder des Deckels oder des Tiegels.

Die elektrische Bremseinrichtung kann eine Bremsschaltung umfassen, die so ausgebildet ist, dass sie einen Gegenstrom oder einen Kurzschluss für den Antrieb schaltet. Dies führt zu einem verzögerungsarmen oder verzögerungsfreien Anhalten des Motors des Antriebs.

Der Antrieb kann einen Gleichstrommotor besitzen.Die bevorzugte Ausführungsform sieht vor, dass der Fortsatz gleichzeitig eine Schwenkachse für ein Kraftübertragungsteil, üblicherweise eine Stange oder eine Gasdruckfeder, ist, wobei die Schwenkachse das deckelseitige Lager des Linearantriebs bilden kann. Eine Ausführungsform der Erfindung sieht, wie gesagt, vor, dass die Deckelschwenkachse mit einer Gasdruckfeder gekoppelt ist, über welche ein Drehmoment auf die Deckelschwenkachse zum Öffnen und/oder Schließen ausgeübt wird, wobei die Gasdruckfeder ein mechanisches Verschwenken des Deckels erlaubt. Damit soll ein schneller Eingriff des Bedieners ermöglicht werden, um den Deckel manuell über einen außen angebrachten Griff schnell hochzuschwenken oder in die geschlossene Stellung zu bringen.

Ferner kann eine Sicherheitsverriegelung vorgesehen sein, die eine Übertragung der mechanischen Öffnungs- und Schließkraft am Deckel auf die Tiegelschwenkachse verhindert. Hiermit wird ausgeschlossen, dass es bei Eingreifen des Bedieners und Verschwenken des Deckels per Hand zu einer Bewegung des Tiegels kommen kann.

Die Öffnungsbewegung des Deckels kann auch durch Linearantrieb und auch durch die Gasdruckfeder erfolgen. Beispielsweise ist es denkbar, dass ein Abschnitt der Öffnungsbewegung des Deckels durch den Linearantrieb folgt und ein zweiter, vorhergehender oder darauffolgender Abschnitt durch die Gasdruckfeder. Beispielsweise wäre es denkbar, dies ist jedoch nicht einschränkend zu verstehen, dass zuerst der Antrieb den Deckel etwas anhebt, sodass sich die Winkelstellung des Deckels zur Gasdruckfeder oder die Gasdruckfeder zu den restlichen Abschnitten eines Gestänges verändert und das durch die Gasdruckfeder aufgebrachte Drehmoment damit erhöht wird. Dann kann die Gasdruckfeder beispielsweise den darauffolgenden zweiten Abschnitt der Öffnungsbewegung des Deckels allein vornehmen.

Umgekehrt, beim Schließen des Deckels, kann beispielsweise ein erster oder zweiter Abschnitt manuell vonstatten gehen.

Als Ausgestaltung kann der Deckel bis zu einem gewissen Punkt geschlossen werden, das endgültige Schließen erfolgt dann durch den Antrieb oder umgekehrt.

Eine Ausführungsform der Erfindung sieht vor, dass das komplette Öffnen und das komplette Schließen des Deckels auch zusätzlich manuell erfolgen kann, beispielsweise um bei Stromausfall an das Tiegelinnere zu gelangen.

Das Langloch der Führung kann gekrümmt verlaufen und einen Verriegelungsabschnitt haben, der quer zu einem deckelseitigen Kraftübertragungsteil liegt, wobei der geöffnete Deckel über das Kraftübertragungsteil am Verriegelungsabschnitt abgestützt ist. Diese Variante sorgt für eine Art Selbstverriegelung oder Selbsthemmung des Systems bei geöffnetem Deckel und damit für die Sicherheitsverriegelung. Der Deckel wird in der geöffneten Stellung rein mechanisch, ohne Kraft auf den Antrieb auszuüben, in der vollständig geöffneten Stellung gehalten und dort abgestützt. Das Gleiche gilt beim Schließen des Deckels.

Für die Bewegung des Antriebs und der durch den Antrieb bewegten Komponenten sind Anschläge, insbesondere ausschließlich starre Anschläge vorgesehen, die bei Betätigen des Antriebs in einer Richtung zeitlich aufeinanderfolgend angefahren werden, sodass entweder der Deckel oder der Tiegel verschwenkt werden. Es ist dadurch nur ein Ende des Linearantriebs zeitlich gesehen in Bewegung.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Seitenansicht des erfindungsgemäßen Gargeräts gemäß einer ersten Ausführungsform,
- Figur 2 eine Seitenansicht des erfindungsgemäßen Gargeräts in einer leicht modifizierten Variante,
- Figur 2a eine vergrößerte Seitenansicht der Führung für ein Lager, das in Figur 2 dargestellt ist, und
- Figur 3 eine schematische Ansicht einer optionalen Koppelung zwischen Antrieb und einem zum Deckel führenden Kraftübertragungsteil,
- Figur 4 eine schematische Seitenansicht einer zweiten Ausführungsform des erfindungsgemäßen Gargeräts vor dem vollständigen Öffnen oder Schließen des Deckels,
- Figur 5 das Gargerät nach Figur 4 in einer noch weiter geöffneten Stellung des Deckels jedoch während des anfangs der Schließbewegung,
- Figur 6 das Gargerät nach Figur 4 bei vollständig geöffnetem Deckel,
- Figur 7 das Gargerät nach Figur 4 bei vollständig gekipptem Tiegel,
- Figur 8 eine vergrößerte Ansicht des deckelseitigen Endes des Langlochs, das in den Figuren 4 bis 6 zu sehen ist, von einer Ansicht mit Bezug auf Figur 4 aus der Zeichenebene heraus, und
- Figur 9 eine schematische Ansicht des Übergangs zwischen Gasdruckfeder und Linearantrieb nach Figur 4, ebenfalls in einer Ansicht, mit Bezug auf Figur 6, aus der Zeichenebene heraus.

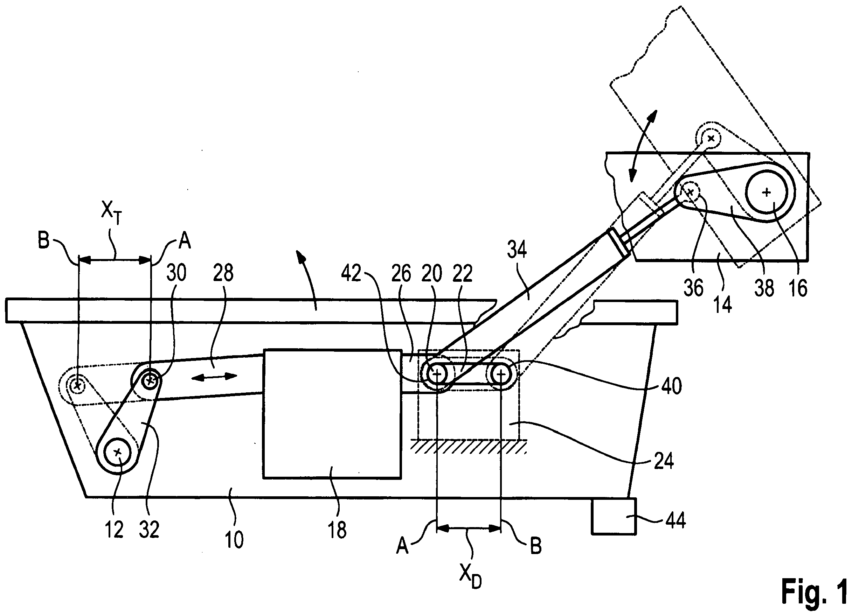

In Figur 1 ist ein Gargerät gezeigt, mit einem Tiegel 10, der um eine angetriebene Tiegelschwenkachse 12 nach vorne kippbar ist, um das Gargut oder, allgemeiner, das sich im Tiegel befindliche Gut aus dem Tiegel herauszukippen. Die Tiegelschwenkachse 12 ist an einem nicht dargestellten Gestell gelagert, wobei die Schwenkachse 12 mit dem Tiegel 10 drehfest gekoppelt ist, sodass ein Drehen der Tiegelschwenkachse 12 zu einem Kippen des Tiegels 10 führt.

Der Tiegel 10 kann mittels eines Deckels 14 geschlossen werden, wobei der Deckel 14 durch eine drehbare Deckelschwenkachse 16 verschwenkt werden kann. Mit durchgezogener Linie ist abschnittsweise der Deckel in der Schließposition dargestellt, mit strichpunktierter Linie in der komplett hochgeschwenkten Position.

Auch die Deckelschwenkachse 16 ist an dem Gestell des Gargeräts gelagert und ist mit dem Deckel 14 drehfest verbunden.

Zum Schwenken des Tiegels 10 und des Deckels 14 ist ein gemeinsamer Antrieb 18, hier in Form eines Linearantriebs vorgesehen.

Bei der gezeigten Ausführungsform ist der Linearantrieb ein elektrischer Hubzylinder.

Der Antrieb 18 hat an seinem deckelseitigen Ende ein Lager 20, das durch einen eine Schwenkachse definierenden Fortsatz gebildet ist, der in einer Führung in Form eines Langlochs 22 aufgenommen ist.

Das Langloch 22 ist beispielsweise in einem gehäuseseitigen Lagerbock 24 ausgebildet, wobei dies nicht einschränkend zu verstehen ist. Der Lagerbock 24 ist mit unterbrochenen Linien dargestellt.

Das Lager 20, genauer gesagt der Fortsatz ist mit einem einen festen Teil des Antriebs 18 bildenden Lagerungsteil 26 gekoppelt. Das Lagerungsteil 26 kann ausfahrbar sein, im vorliegenden Fall ist jedoch das Lagerteil 26 ein nicht ausfahrbares Ende des Antriebs 18 in Form eines Gabelkopfs, wohingegen am entgegengesetzten Ende des Antriebs 18 eine ausfahrbare Stange 28 ausgebildet ist, die an ihrem freien Ende wiederum ein Lager, nämlich ein tiegelseitiges Lager 30 bildet oder trägt.

Das tiegelseitige Lager 30 ist eine Schwenkachse, mit der die Stange 28 mit einem Schwenkhebel 32 gekoppelt ist. Der Schwenkhebel 32 ist wiederum drehfest mit der Tiegelschwenkachse 12 gekoppelt.

Das Lager 20 am entgegengesetzten Ende des Linearantriebs 18 wiederum ist mit einem Kraftübertragungsteil 34 gekoppelt, das zum Beispiel eine Stange oder, wie im vorliegenden Fall, eine Gasdruckfeder sein kann. Das Kraftübertragungsteil 34 ist an seinem entgegengesetzten Ende über ein Lager 36 mit einem Schwenkhebel 38 gekoppelt, der drehfest mit der Deckelschwenkachse 16 gekoppelt ist.

Die dargestellte Konstruktion mit den Schwenkhebeln 32, 38, dem Kraftübertragungsteil 34 und den einzelnen Lagern 20, 30, 36 sowie dem Antrieb 18 bildet ein Gestänge, in welches der Antrieb 18 integriert ist und einen Gestängeabschnitt bildet. Der Antrieb 18 liegt somit im direkten Kraftflussweg zwischen der Tiegelschwenkachse 12 und der Deckelschwenkachse 16 und ist sozusagen in Reihe zu den übrigen Teilen des Gestänges geschaltet.

Die Lager 20, 30 für den Antrieb 18 sind beide durch den Linearantrieb 18 verfahrbar, sodass sich eine Art schwimmende oder fliegende Lagerung für den Antrieb 18 ergibt.

Es sind mehrere Anschläge vorgesehen, die sicherstellen, dass nur immer ein Lager 20 oder 30 durch den eingeschalteten Linearantrieb 18 bewegt wird. Diese Anschläge bilden eine Einrichtung zum Einschränken des Freiheitsgrades zumindest eines der Lager 20 oder 30.

Ein erster Anschlag 40 ist durch das dem Deckel zugeordnete axiale Ende des Randes des Langlochs 22 gebildet.

Ein zweiter Anschlag 42 ist durch den gegenüberliegenden Rand, das heißt das entgegengesetzte axiale Ende des Langlochs 22 definiert.

Ein dritter Anschlag 44 ist durch die Auflage des Tiegels in der Garposition auf dem Gestell gebildet.

Bei der dargestellten Ausführungsform sind ausschließlich starre, das heißt nicht schaltbare und unbewegliche Anschläge vorhanden.

Der am deckelseitigen axialen Ende des Linearantriebs vorgesehene erste Anschlag 40 ist zum Begrenzen der Deckelschwenkbewegung vorgesehen, wie nachfolgend erläutert wird.

In der Ausgangsstellung, in der der Tiegel 10 in der Garstellung liegt und damit auf dem dritten, d.h. dem Tiegelanschlag 44 aufliegt, das heißt horizontal ausgerichtet ist und der Deckel 14 den Tiegel 10 verschließt, sind die Lager 20, 30 in Position A, das heißt maximal nahe zusammen. Hier kann das Lager 20, genauer gesagt der entsprechende antriebseitige Fortsatz, der in das Langloch 22 ragt, am Anschlag 42 anliegen.

Wird der Antrieb 18 angeschaltet, so fährt die Stange 28 weiter aus. Die Hebelmimik ist aber so ausgebildet, und der Tiegel 10 ist im Verhältnis zum Deckel 14 so schwer, dass das Lager 30 in der Position A bleibt, wogegen das Lager 20 längs der Führung 22 nach rechts verfährt, sodass das Kraftübertragungsteil 34 mit nach rechts verfahren wird und dabei den Schwenkhebel 38 im Uhrzeigersinn und damit den Deckel 14 aufschwenkt.

Die Öffnungsbewegung für den Deckel 14 wird dann gestoppt, wenn der erste Anschlag 40 vom Lager 20 bzw. dem antriebseitigen Fortsatz, der das Lager bildet, erreicht wird (Position B). In dieser Stellung, wie auch in jeder anderen Zwischenstellung, kann der Antrieb 18 gestoppt werden. Soll anschließend der Tiegel 10 verschwenkt werden, wird der Antrieb 18 in der gleichen Richtung weiter betrieben, die Stange 28 fährt noch weiter aus und verschwenkt den Schwenkhebel 32 durch Bewegen des Lagers 30 in die Position B. Damit wird der Tiegel 10 gekippt.

Optional kann ein weiterer mechanischer Anschlag vorgesehen sein, der zum Beispiel in Schwenkrichtung vor dem Schwenkhebel 32 positioniert ist und gegen den der Schwenkhebel 32 in der Position B drückt. Bei gekipptem Tiegel 10 und hochgeschwenktem Deckel 14 befinden sich die Lager 20, 30 jeweils in der Position B.

Der Schwenkwinkel des Tiegels 10 beträgt größer oder gleich 60°, wobei er auch in jeder beliebigen Zwischenstellung angehalten werden kann.

Wichtig ist jedoch, dass bei jeder Stellung des Tiegels 10, auch der Maximalstellung, der Schwerpunkt des Tiegels 10 immer hinter der Tiegelschwenkachse 12, also zwischen den Schwenkachsen 12, 16 liegt, sodass es zu keiner Kraftumkehr von Druck- auf Zugbelastung für den Antrieb kommt.

Der Verfahrweg für das Lager 20 ist der Hubweg x_{D}, also der Verfahrweg für den Deckel. Der Hubweg des Lagers 30, der mit x_{T} in Figur 1 bezeichnet ist, ist der Verfahrweg für den Tiegel 10.

Beim Zurückschwenken von Tiegel 10 und Deckel 14 schwenkt aufgrund der Schwerkraft des Tiegels 10 dieser zuerst zurück, wobei sich der Antrieb 18 am Anschlag 40 abstützt und die Stange 28 weiterhin auf Druck belastet ist.

Hat der Tiegel 10 seine Horizontalstellung erreicht und der Tiegel liegt auf dem Tiegelanschlag 44 auf, ist das Lager 30 wieder in Position A. Wird der Linearantrieb 18 weiter in derselben Richtung betätigt, so wird anschließend der Deckel 14 zurückgeschwenkt, indem das Lager 20 in der Führung 22 zurück zur Position A bewegt wird. Auch hierbei kann die Schwerkraft des Deckels diese Schließbewegung verursachen, sodass der Antrieb 18 als Bremse wirkt. Natürlich ist es je nach Geometrie auch möglich, dass zum Schließen des Deckels 14 eine Zugkraft ausgeübt werden muss.

Über die Gasdruckfeder ist es möglich, dass der Bediener des Gargeräts den Deckel 14 manuell teilweise oder komplett öffnet oder schließt. Der Hub x_{D} wird dann dazu benutzt, eine kleine Winkelbewegung des Deckels auszuführen, um beispielsweise am Deckel in einem angehängtem Korb befindliches Gargut in ein Garmedium (Öl, Wasser,...) einzutauchen und wieder auszuheben.

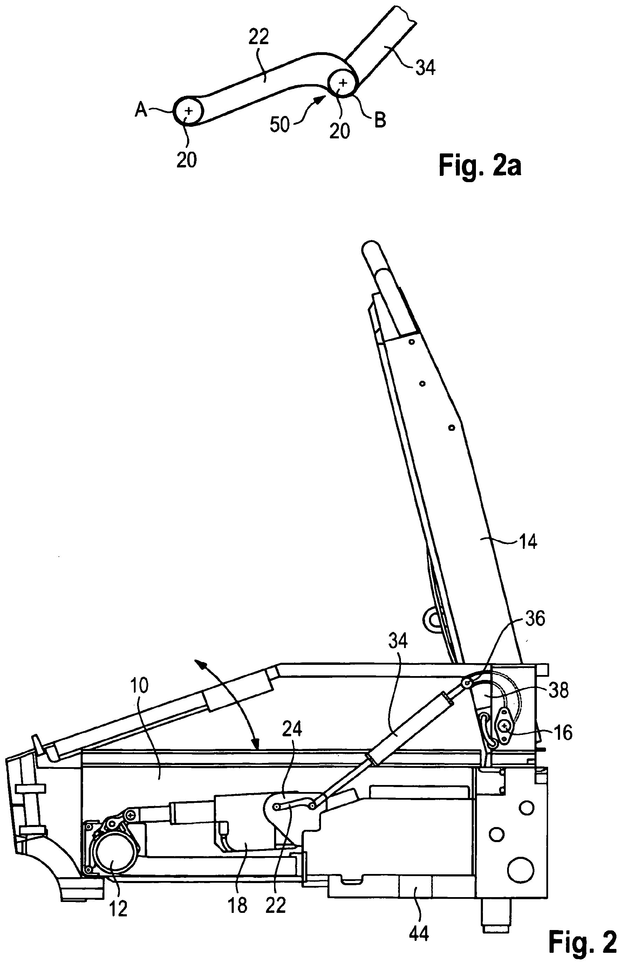

Die Ausführungsform nach Figur 2 entspricht im Wesentlichen der nach Figur 1, sodass im Folgenden nur auf die Unterschiede eingegangen wird. Die bislang eingeführten Bezugszeichen bleiben für gleiche oder gleichwirkende Teile erhalten.

Der wesentliche Unterschied zwischen den Ausführungsformen nach Figur 1 und Figur 2 liegt darin, dass eine Sicherheitsverriegelung vorgesehen ist, die eine Übertragung der Kraft beim mechanischen, das heißt manuellen Öffnen und/oder beim manuellen Schließen des Deckels auf die Tiegelschwenkachse 32 verhindert.

Bei der Ausführungsform nach Figur 2 umfasst die Sicherheitsverriegelung die Führung oder das Langloch 22, die eine besondere Form aufweist. Das entsprechende Langloch 22 ist nämlich an seinem rechten, das heißt deckelseitigem Ende gekrümmt, und zwar schräg nach unten. Der entsprechende Abschnitt des Langlochs heißt Verriegelungsabschnitt 50. Dieser Verriegelungsabschnitt 50 verläuft quer, im Wesentlichen senkrecht zum deckelseitigen Kraftübertragungsteil 34, genauer gesagt zu seiner Wirklinie in der geöffneten Stellung des Deckels (siehe vergrößerte Ansicht des Langlochs 22 in Figur 2a). Durch diese Krümmung des Langlochs 22 kann das Lager 20, auch hier wieder der Fortsatz, der den Antrieb 18 mit dem Kraftübertragungsteil 34 koppelt, gegen den Rand des Langlochs 22 drücken, ohne von ihm abzurutschen. Somit ergibt sich eine stabile, selbstverriegelnde Stellung. Die Kraft, die auf den Deckel 14 ausgeübt wird, wird somit direkt in den Lagerbock 24 eingeleitet und nicht in das übrige Gestänge.

Das Langloch 22 (Sicherheitsverriegelung) ist auch so ausgeführt, dass sich beim Erreichen des Lagers 20 am Anschlag 40 (bzw. Tiegel erreicht Anschlag 44), also dem Wechsel von Tiegelbewegung auf Deckelbewegung, nur eine geringe Relativbewegung am Deckel ergibt. Dies ermöglicht es, eine einfache Abschaltung des Antriebes 28 nach Durchlaufen des Tiegelhubes Xt mit üblichen Mikro- oder Näherungsschaltern und damit zwangsläufigem, geringem Nachlaufen des Antriebs zu realisieren, ohne eine ungewünschte Bewegung am Deckel zu erzeugen. Anders ausgedrückt ist die Form des Langlochs 22 so gewählt, dass sich ein ungenaues Abschalten des Antriebs nach Erreichen des Lagers 30 in Position A und Tiegel in Garstellung auf Anschlag 44 keine ungewünschte Bewegung des Deckels 14 ergibt.

Mit einem Schaltelement für das Lager 20 in Position A (Anschlag 40) lässt sich bei geeigneter Ausführung des Langlochs 22 (z.B. wie in Fig. 2a dargestellt) auch eine weitere Sicherheitsfunktion mittels einer integrierte Sicherheitseinrichtung integrieren. Sobald sich beim Durchlaufen des Hubes Xt (Lager 30 aus Position B nach Position A, d.h. Tiegelabsenken) ein unzulässiger Widerstand zu hohe Kraft ergibt (z.B. Kollision mit Gegenstand unter dem Tiegel, Quetschung einer Hand des Bedieners,...), bewegt sich das Lager 20 aus der Position B heraus (vom Anschlag 40 weg), wodurch mit einem bei Anschlag 40 angebrachten Näherungs- oder Mikroschalter, der die Position des Lagers 20 überwacht, ein schnelles Abschalten des Antriebs erreicht werden kann. Damit kann diese integrierte Sicherheitseinrichtung zum einen die Mechanik des Gerätes (Gestänge) vor Beschädigung, wie auch eine Verletzung des Bedieners verhindert werden.

Natürlich kann alternativ der Linearantrieb auch um 180° gedreht verbaut sein, das heißt, die Stange 28 ist auf dem deckelseitigen Ende des Antriebs vorgesehen.

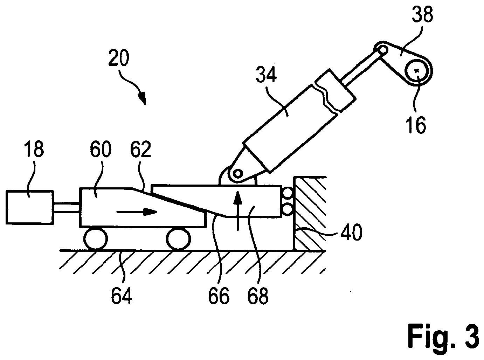

Figur 3 zeigt eine Variante der Kopplungsstelle zwischen Linearantrieb 18 und Kraftübertragungsteil 34. Anstatt einer festen Koppelung über das Lager 20 ist hier ein Lager 20 vorgesehen, bei dem über schiefe Ebenen und Hebel eine Kraftumlenkung inklusive Anschlägen erreicht werden kann. Beispielsweise treibt der Antrieb 18 ein Teil 60 mit einer schiefen Ebene 62 an, das längs einer Führung 64 verfahrbar ist. Die schiefe Ebene 62 wird von einer schiefen Ebene 66 eines zweiten Teils 68 kontaktiert. Das Teil 68 ist wiederum in einer Richtung quer zur Führungsrichtung des Teils 60 gelagert, hier beispielsweise senkrecht dazu. Mit dem Teil 68 ist das Kraftübertragungsteil 34 gekoppelt.

Wird der Linearantrieb 18 angetrieben und bewegt er das Teil 60 nach rechts, wird das Teil 68 durch die schiefen Ebenen 62, 66 nach oben bewegt und damit das Kraftübertragungsteil 34 ebenfalls nach oben bewegt, um den Deckel 14 anzuheben.

Das Teil 60 wird so lange verfahren, bis es den ersten Anschlag 40 erreicht hat. Anschließend wird das entgegengesetzte Lager 30 des Linearantriebs 18 bewegt.

Eine Besonderheit des Antriebssystems zum Schwenken des Tiegels 10 und des Deckels 14 besteht darin, dass trotz des Vorsehens nur eines gemeinsamen Antriebs durch ausschließlich starre Anschläge bei Betätigung des Antriebs in einer Richtung zeitlich aufeinanderfolgend diese Anschläge angefahren werden, sodass entweder der Deckel oder der Tiegel verschwenkt wird und nur ein Ende des Linearantriebs jeweils verfahren wird.

Der Antrieb erlaubt es auch, Deckel und Tiegel in beliebigen Positionen anzuhalten.

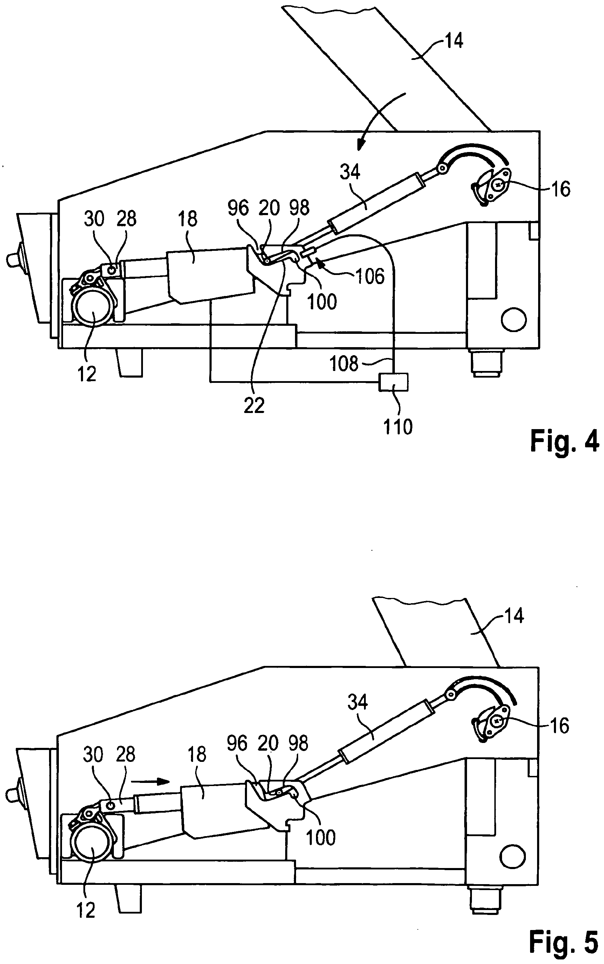

Die Ausführungsform nach den Figuren 4 bis 9 entspricht weitestgehend der nach den Figuren 2 und 2a, jedoch sind einige Details anders, auf die im Folgenden eingegangen wird.

Wie zuvor werden jedoch die bereits eingeführten Bezugszeichen für gleiche Teile oder Teile gleicher Funktion wiederverwendet, sodass bezüglich der Teile nicht mehr einzeln auf sie eingegangen werden muss, sondern im Folgenden nur die Unterschiede herausgestellt werden.

Bei der Ausführungsform nach den Figuren 4 bis 9 ist das Langloch 22 an seinem dem Antrieb nahen Ende nach oben offen ausgeführt, sodass das Lager 20 von oben eingeführt werden kann, was für eine schnellere und einfachere Montage und Demontage des Antriebs 18 sorgt.

Das Langloch 22 hat verschiedene Abschnitte, den ersten, vom offenen Ende schräg nach unten und vom Antrieb wegführenden Abschnitt 96, sowie einen anschließenden, leicht schräg nach oben in Richtung Deckelschwenkachse 16 weisenden Abschnitt 98 sowie einen dritten, schräg nach unten verlaufenden Abschnitt 100, in dem auch der Verriegelungsabschnitt 50 liegt.

In der in Figur 4 gezeigten Stellung ist der Tiegel nicht geschwenkt, der Deckel 14 hingegen teilweise manuell geöffnet, sodass die Gasdruckfeder 34 zumindest teilweise ausgefahren ist.

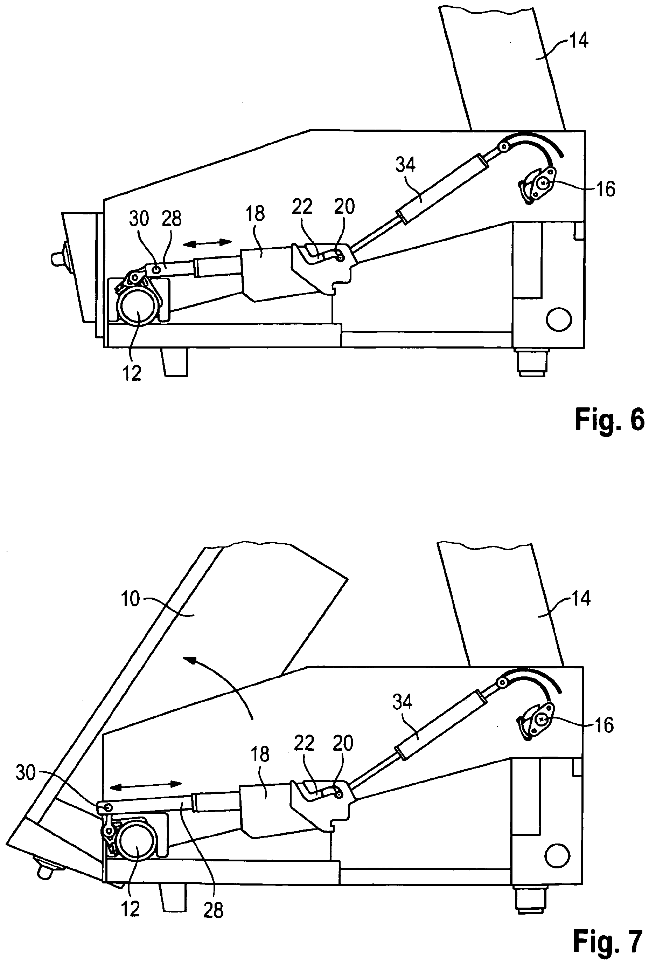

Der Deckel 14 kann jedoch auch aus seiner Schließstellung, was üblicher ist, mittels des Antriebs 18 geöffnet werden. Dann wird das Lager 20 aus der in Figur 4 gezeigten Ausgangsstellung, bezogen auf Figur 4 nach rechts entlang des schräg aufwärts verlaufenden, rampenförmigen Abschnitts 98 gefahren, bis das Lager 20 in den Abschnitt 100 des Langlochs 22 gelangt, der wieder schräg nach unten abfällt und in dem das Lager 20 beispielsweise in Figur 6 dargestellt liegt. In dieser Stellung ist dann der Deckel 14 etwas geöffnet, beispielsweise 20°bis 30°. Die restliche Öffnungsbewegung erfolgt dann manuell oder mittels der Gasdruckfeder 34 bis in den vollständig geöffneten Zustand, der in Figur 6 zu sehen ist. In diesem Zustand ist die Gasdruckfeder im maximal ausgefahrenen Zustand. Beim anschließenden weiteren Betätigen des Linearantriebs 18 wird dann der Tiegel 10 ausschließlich durch den Linearantrieb 18 verschwenkt, bis der in Figur 7 gezeigte Zustand erreicht ist.

Das Zurückschwenken des Tiegels 10 erfolgt dann wieder durch den Antrieb 18. Der Deckel 14 bleibt dabei komplett offen.

Soll der Deckel 14 anschließend wieder geschlossen werden, so muss das Lager 20 erst aus der selbsthemmenden Verriegelungsstellung entfernt werden, die das Lager 20 in dem in den Figuren 6 und 7 gezeigten Zustand einnimmt. Dazu wird der Antrieb 18 weiter bewegt, und die Stange 28 fährt weiter ein. Damit fährt auch das Lager 20 aus dem nach unten abgeknickten Abschnitt 100 des Langlochs 22 und entlang der schräg abwärts verlaufenden Rampenfläche (Abschnitt 98) nach unten, wie dies in Figur 5 dargestellt ist.

Wenn dann die Stellung von Figur 4 wieder erreicht ist, kann der Deckel 14 manuell komplett nach unten geschwenkt werden. Das Lager 20 liegt in dieser Position in einer erneuten selbsthemmenden Stellung stabil, und die durch die Gasdruckfeder 34 auf das Lager 20 durch Absenken des Deckels 14 per Hand aufgebrachte Kraft wirkt nicht dahin gehend, dass das Lager 20 nach oben in den schräg aufwärts laufenden Abschnitt 96 des Langlochs 22 gelangt.

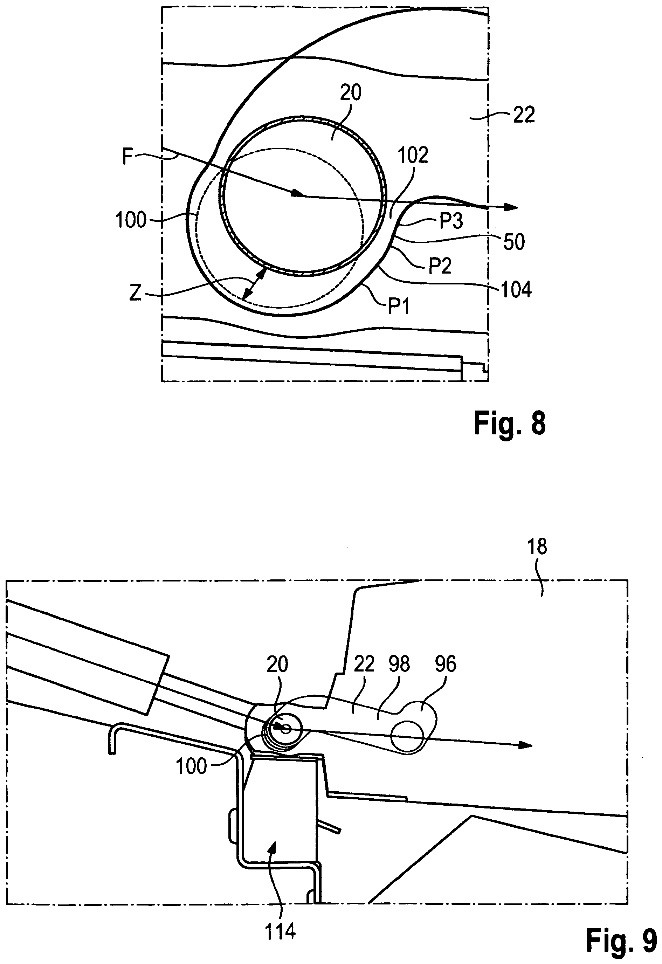

Der Abschnitt 100 des Langlochs 22, der der Deckelschwenkachse 16 am nächsten ist, ist in Figur 8 vergrößert dargestellt. Zu beachten ist, dass zur besseren Darstellung das Langloch 22 im Bereich des Abschnitts 100 übertrieben breit dargestellt ist, sodass ein übergroßer Abstand des Randes 102, der den Abschnitt 100 begrenzt, zum Lager 20 entsteht. Natürlich liegt das Lager 20 stets am Rand 102, der das Langloch 22 begrenzt, an und ist nicht von beiden gegenüberliegenden Randabschnitten beabstandet, wie dies in Figur 8 zur besseren Darstellung des Randverlaufs eingezeichnet ist.

Der Abschnitt 100 besitzt zwischen den Punkten P2 und P3 den Verriegelungsabschnitt 50, der linear verläuft, extrem kurz ist und in dem der Rand 102, an dem das Lager 20 anliegt, zumindest senkrecht zur Richtung der Kraft F verläuft, die durch die Gewichtskraft des Deckels 14 über die Gasdruckfeder 34 auf den Rand 102 ausgeübt wird. Diese Kraft ist die Abstützkraft, bei der es wichtig ist, dass durch die Abstützkraft und die Ausrichtung des Randes 102 im Bereich des Verriegelungsabschnitts 50 kein Herausrutschen des Lagers 20 aus dem Abschnitt 100 erfolgt.

Der Rand 102 kann im Verriegelungsabschnitt 50 auch so schräg gestellt sein, dass das Lager 20 in Richtung zum Punkt P2 wandert, wenn es mit Druck am Rand 102 aufliegt.

Unmittelbar oder annähernd unmittelbar an den Verriegelungsabschnitt 50 grenzt ein sogenannter Nachlaufschnitt 104 an. Der Rand 102, an dem das Lager 20 hier anliegt, bildet einen Kreisbogenabschnitt, dessen Mittelpunkt auf der gedachten Mittelachse der Deckelschwenkachse 16 liegt.

Das bedeutet, wenn das Lager 20 am Rand 102 zwischen den Punkten P1 und P2 gleitet, verändert sich der Öffnungswinkel des Deckels 14 nicht.

Mit Z ist die Nachlaufstrecke bezeichnet, die das Lager 20 maximal durchschreiten kann, nachdem der Deckel 14 in seiner maximalen Öffnungsstellung ist.

Diese Öffnungsstellung 14 wird mithilfe eines Sensors 104, der auch als Schalter ausgeführt sein kann, detektiert. Dieser Schalter oder Sensor 104 wird über ein Kabel 108 mit dem Steuergerät des Gargeräts gekoppelt.

Der Schalter oder Sensor 104 kann beispielsweise ein Näherungsschalter, ein Reed- oder Hallkontakt oder ein Mikroschalter oder dergleichen sein.

Bis die Schaltbewegung oder das Ansprechen des Sensors 104 erfolgt ist und bis es schließlich zum Abschalten des Antriebs 18 und zu seinem tatsächlichen Stillstand kommt, vergehen gegebenenfalls einige Millisekunden, die zu einem Nachlauf führen, der sich auch in einer Bewegung des Lagers 20 niederschlägt.

Damit dieser Nachlauf zu keiner oder keiner erwähnenswerten weiteren Schwenkbewegung des Deckels 14 führt, ist der Nachlaufabschnitt 104 vorgesehen.

Eine zusätzliche oder optionale Variante sieht vor, dass eine elektrische Bremseinrichtung 110, die Teil der Steuerung sein kann, vorhanden ist. Diese elektrische Bremseinrichtung 110 zum Abbremsen des Antriebs 18 wird ab Erreichen der vollständig geöffneten Position des Deckels 14 betätigt. Sobald der Schalter oder Sensor 106 das Erreichen dieser vorgegebenen Position detektiert, wird durch eine elektronische Bremsschaltung ein Gegenstrom oder ein Kurzschluss für den Antrieb 18 erzeugt oder geschaltet, der zu einem schnellen, abrupten und deutlich verkürzten Nachlauf führt.

Zu betonen ist, dass in der vollständig geöffneten Stellung des Deckels 14, die in Figur 6 dargestellt ist, die in den Figuren 2a und 8 gezeigte Selbsthemmung des Systems, durch die der Deckel 14 sicher in der geöffneten Position verbleiben kann und durch die ein manuelles Schließen des Deckels 14 möglich ist, nicht auf die Ausführung mit den gezeigten, speziellen Gestängen beschränkt ist. Es sind auch andere Führungen für das Lager 20 möglich, beispielsweise durch eine Zahnstange und ein Ritzel oder dergleichen, sodass dieses Selbsthemmungsprinzip nicht auf die dargestellten Ausführungsformen oder das dargestellte Getriebe oder Gestänge beschränkt ist.

Das vorerwähnte Selbsthemmungsprinzip sollte auch am entgegengesetzten Ende des Langlochs 22, im Abschnitt 96, realisiert sein, damit die Lage des Lagers 20 in der in Figur 4 gezeigten Stellung stabil ist. Hier sollte kein Wackeln durch geringfügige mögliche Verschiebungen des Lagers 20 möglich sein, denn dies würde ein qualitativ schlechten Eindruck ergeben, der Deckel würde nämlich Spiel haben, und es könnten sich Geräusche ergeben.

Zur Erzielung einer höheren Wertigkeit des Gargeräts trägt auch eine Dämpfungseinrichtung 114 bei, die in Figur 9 gezeigt ist.

Die Dämpfungseinrichtung 114 liegt beispielsweise so unterhalb des Lagers 20 im Bereich des Abschnitts 100 des Langlochs 22, dass das Lager 20 oder ein mit ihm verbundener Abschnitt, zum Beispiel ein Lagerauge, auf die Dämpfungseinrichtung 114 trifft, wenn das Lager 20 im Abschnitt 100 nach unten rutscht. Im Abschnitt 100 kann das Lager 20 nämlich abwärts "fallen". Die Dämpfungseinrichtung 14, die ein mechanisches, hydraulisches oder pneumatisches Maschinenelement sein kann, mildert dieses abrupte Absinken des Lagers 20.

Die Stellungen der einzelnen Angriffspunkte der angetriebenen Teile oder der einzelnen Elemente des Gestänges können so ausgeführt sein, dass die Gasdruckfeder 34 auch die Schließbewegung abschnittsweise hervorruft, und somit nicht nur für ein Öffnungsdrehmoment, sondern auch für ein Schließdrehmoment sorgt. Da sich die Anlenkpunkte der Gasdruckfeder 34 während der Bewegung des Antriebs 18 und der Öffnungs- oder Schließbewegung des Deckels 14 ändert, ändern sich auch die entsprechenden Hebelverhältnisse und Drehmomente.

## Patentansprüche

1. Gargerät, mit einem schwenkbaren, eine Tiegelschwenkachse (12) aufweisenden Tiegel (10) und einem schwenkbaren, eine Deckelschwenkachse (16) aufweisenden Deckel (14), **dadurch gekennzeichnet, dass** ein gemeinsamer Antrieb (18) zum Verschwenken des Tiegels (10) und des Deckels (14) vorgesehen ist.

2. Gargerät nach Anspruch 1, **dadurch gekennzeichnet, dass** mit der Tiegelschwenkachse (12) und/oder der Deckelschwenkachse (16) jeweils ein Schwenkhebel (32, 38) drehfest verbunden ist bzw. sind, welcher bzw. welche mit dem Antrieb (18) gekoppelt ist bzw. sind.

3. Gargerät nach Anspruch 1 oder 2, **dadurch gekennzeichnet, dass** die Tiegelschwenkachse (12) und die Deckelschwenkachse (16) über ein Gestänge miteinander gekoppelt sind, insbesondere wobei der Antrieb (18) in das Gestänge integriert ist und es antreibt.

4. Gargerät nach einem der vorhergehenden Ansprüche, **dadurch gekennzeichnet, dass** der Antrieb (18) ein Linearantrieb, insbesondere ein elektrischer Hubzylinder ist, wobei der Linearantrieb verschiedene Haltepositionen einnehmen kann, vorzugsweise beliebige Haltepositionen.

5. Gargerät nach den Ansprüchen 3 und 4, **dadurch gekennzeichnet, dass** der Linearantrieb einen Gestängeabschnitt bildet.

6. Gargerät nach Anspruch 4 oder 5, **dadurch gekennzeichnet, dass** der Linearantrieb an seinen beiden axialen Enden an durch ihn verfahrbaren Lagern (20, 30) angekoppelt ist.

7. Gargerät nach einem der Ansprüche 4 bis 6, **dadurch gekennzeichnet, dass** am deckelseitigen axialen Ende des Linearantriebs ein erster Anschlag (40) zum Begrenzen der Deckelschwenkbewegung vorhanden ist, bis zu dessen Erreichen der Deckel (14) aus der Schließ- in seine Öffnungsstellung verschwenkbar ist und ab dessen Erreichen das tiegelseitige Ende des Linearantriebs verfahren wird.

8. Gargerät nach einem der Ansprüche 4 bis 7, **dadurch gekennzeichnet, dass** eine Führung (22) am deckelseitigen Ende des Linearantriebs für den Linearantrieb vorgesehen ist, insbesondere wobei an zumindest einem axialen Ende der Führung und/oder für den Tiegel ein Anschlag (40, 42, 44) vorgesehen ist.

9. Gargerät nach Anspruch 8, **dadurch gekennzeichnet, dass** die Führung durch ein Langloch (22) gebildet ist, in welchem ein durch den Linearantrieb verschiebbarer Fortsatz verfahrbar ist, insbesondere dass das Langloch (22) an wenigstens einem Ende einen Nachlaufabschnitt (104) besitzt, in dem die Nachlaufstrecke des Antriebs (18) nach Abschalten liegt, wobei der Nachlaufabschnitt (104) einen das Langloch (22) begrenzenden Rand (102) aufweist, der einen Kreisbogenabschnitt bildet, dessen Mittelpunkt auf der gedachten Mittelachse der Deckelschwenkachse (16) liegt.

10. Gargerät nach einem der Ansprüche 7 bis 9, **dadurch gekennzeichnet, dass** das Langloch (22) an seinem, dem hochgeschwenkten Deckel (14) zugeordneten Ende nach unten abfällt und dass eine Dämpfungseinrichtung (114) vorgesehen ist, die eine Senkbewegung des Deckels (14) bei Erreichen des abfallenden Endes dämpft.

11. Gargerät nach einem der vorhergehenden Ansprüche, **dadurch gekennzeichnet, dass** eine Sicherheitsverriegelung vorgesehen ist, die eine Übertragung einer mechanischen Kraft zum Öffnen und/oder Schließen des Deckels (14) auf die Tiegelschwenkachse (12) verhindert.

12. Gargerät nach einem der Ansprüche 8 bis 10 und nach Anspruch 11, **dadurch gekennzeichnet, dass** die Sicherheitsverriegelung durch das Langloch gebildet ist, welches gekrümmt verläuft und einen Verriegelungsabschnitt (50) hat, der quer zu einem deckelseitigen Kraftübertragungsteil (34), insbesondere linear, verläuft, wobei der geöffnete Deckel (14) über das Kraftübertragungsteil (34) am Verriegelungsabschnitt (50) abgestützt ist.

13. Gargerät nach einem der vorhergehenden Ansprüche, **dadurch gekennzeichnet, dass** die Deckelschwenkachse (16) mit einer Gasdruckfeder (34) gekoppelt ist, über welche ein Öffnungsdrehmoment und/oder ein Schließdrehmoment auf die Deckelschwenkachse (16) ausgeübt werden kann, wobei die Gasdruckfeder ein mechanisches Verschwenken des Deckels (14) erlaubt.

14. Gargerät nach einem der vorhergehenden Ansprüche, **gekennzeichnet durch** Anschläge (40, 42, 44), insbesondere ausschließlich starre Anschläge, die bei Betätigen des Antriebs (18) in einer Richtung zeitlich aufeinanderfolgend angefahren werden, sodass entweder der Deckel (14) oder der Tiegel (10) verschwenkt werden.

15. Gargerät nach einem der vorhergehenden Ansprüche, **gekennzeichnet durch** eine integrierte Sicherheitseinrichtung mit einer Positionsüberprüfung des Lagers (20) und direktem Abschalten des Antriebs, wenn das Lager (20) seine Position während des Hubes (Xt), insbesondere des Tiegels (10) während des Absenkens, verlässt.

## Claims

1. A cooking appliance comprising a pivotable pot (10) having a pot pivot axle (12) and a pivotable lid (14) having a lid pivot axle (16), **characterized in that** a common drive (18) is provided for pivoting the pot (10) and the lid (14).

2. The cooking appliance according to claim 1, **characterized in that** a swiveling lever (32, 38) is respectively connected to the pot pivot axle (12) and/or to the lid pivot axle (16) in a torque-proof manner, said swiveling lever(s) being coupled to the drive (18).

3. The cooking appliance according to claim 1 or 2, **characterized in that** the pot pivot axle (12) and the lid pivot axle (16) are coupled to each other via a linkage, more particularly the drive (18) being integrated in the linkage and driving it.

4. The cooking appliance according to any of the preceding claims, **characterized in that** the drive (18) is a linear drive, in particular an electric lifting cylinder, the linear drive being able to adopt different stop positions, preferably any desired stop position.

5. The cooking appliance according to claims 3 and 4, **characterized in that** the linear drive forms a linkage portion.

6. The cooking appliance according to claim 4 or 5, **characterized in that** the linear drive has its two axial ends coupled to bearings (20, 30) which can be moved through it.

7. The cooking appliance according to any of claims 4 to 6, **characterized in that** the lid-side axial end of the linear drive is provided with a first stop (40) for limiting the lid's swiveling movement, the lid (14) being able to be swiveled from its closed position to its open position up to the moment of reaching said stop, and the pot-side end of the linear drive being moved as from the moment of reaching said stop.

8. The cooking appliance according to any of claims 4 to 7, **characterized in that** a guide (22) is provided at the lid-side end of the linear drive for the linear drive, in particular a stop (40, 42, 44) being provided on at least one axial end of the guide and/or for the pot.

9. The cooking appliance according to claim 8, **characterized in that** the guide is formed by an elongated hole (22) in which a protrusion can move which can be translated by the linear drive, in particular that the elongated hole (22) has at least one end provided with an overrun portion (104) which accommodates the overrun length of the drive (18) after deactivation, the overrun portion (104) forming an edge (102) limiting the elongated hole (22) which edge constitutes a circular arc portion whose center lies on the imaginary center axis of the lid pivot axle (16).

10. The cooking appliance according to any of claims 7 to 9, **characterized in that** the elongated hole (22) slopes down at its end associated with the tipped up lid (14), and **in that** a damping device (114) is provided which dampens a lowering motion of the lid (14) upon reaching the sloping end.

11. The cooking appliance according to any of the preceding claims, **characterized in that** a safety locking means is provided which prevents a transmission of a mechanical force for opening and/or closing the lid (14) to the pot pivot axle (12).

12. The cooking appliance according to any of claims 8 to 10 and according to claim 11, **characterized in that** the safety locking means is formed by the elongated hole which has a curved profile and includes a locking portion (50) extending transversely to a lid-side force transmission part (34), in particular in linear fashion, the opened lid (14) being supported on the locking portion (50) via the force transmission part (34).

13. The cooking appliance according to any of the preceding claims, **characterized in that** the lid pivot axle (16) is coupled to a gas pressure spring (34) by means of which an opening torque and/or a closing torque can be exerted on the lid pivot axle (16), the gas pressure spring allowing a mechanical pivoting of the lid (14).

14. The cooking appliance according to any of the preceding claims, **characterized by** stops (40, 42, 44), in particular exclusively rigid stops, which are contacted consecutively in time when the drive (18) is actuated in one direction, so that either the lid (14) or the pot (10) is swiveled.

15. The cooking appliance according to any of the preceding claims, **characterized by** an integrated safety device comprising a position control means for the bearing (20) and a direct deactivation of the drive if the bearing (20) leaves its position during the stroke (Xt), in particular of the pot (10) during lowering.

## Revendications

1. Appareil de cuisson, comportant un poêlon (10) pivotant qui présente un axe de pivotement de poêlon (12) et un couvercle (14) pivotant qui présente un axe de pivotement de couvercle (16), **caractérisé en ce qu'**il est prévu un entraînement commun (18) pour le pivotement du poêlon (10) et du couvercle (14).

2. Appareil de cuisson selon la revendication 1, **caractérisé en ce qu'**un levier de pivotement (32, 38) est respectivement relié solidaire en rotation à l'axe de pivotement de poêlon (12) et/ou à l'axe de pivotement de couvercle (16), le ou les levier(s) de pivotement étant couplé(s) à l'entraînement (18).

3. Appareil de cuisson selon la revendication 1 ou 2, **caractérisé en ce que** l'axe de pivotement de poêlon (12) et l'axe de pivotement de couvercle (16) sont couplés l'un à l'autre par l'intermédiaire d'une tringlerie, plus particulièrement l'entraînement (18) étant intégré à la tringlerie et entraînant celle-ci.

4. Appareil de cuisson selon l'une des revendications précédentes, **caractérisé en ce que** l'entraînement (18) est un entraînement linéaire, plus particulièrement un cylindre de levage électrique, l'entraînement linéaire étant apte à prendre différentes positions d'arrêt, de préférence n'importe quelles positions d'arrêts.

5. Appareil de cuisson selon les revendications 3 et 4, **caractérisé en ce que** l'entraînement linéaire forme un tronçon de tringlerie.

6. Appareil de cuisson selon la revendication 4 ou 5, **caractérisé en ce que** l'entraînement linéaire est couplé à ses deux extrémités axiales à des paliers (20, 30) aptes à être déplacés par ce dernier.

7. Appareil de cuisson selon l'une des revendications 4 à 6, **caractérisé en ce qu'**une première butée (40) est présente à l'extrémité axiale côté couvercle de l'entraînement linéaire pour limiter le mouvement de pivotement du couvercle, le couvercle (14) étant apte à être pivoté de la position de fermeture vers sa position d'ouverture jusqu'à ce que la butée soit atteinte, et l'extrémité côté poêlon de l'entraînement linéaire étant déplacée à partir du moment où la butée est atteinte.

8. Appareil de cuisson selon l'une des revendications 4 à 7, **caractérisé en ce qu'**il est prévu un guidage (22) pour l'entraînement linéaire à l'extrémité côté couvercle de l'entraînement linéaire, plus particulièrement une butée (40, 42, 44) étant prévue à au moins une extrémité axiale du guidage et/ou pour le poêlon.

9. Appareil de cuisson selon la revendication 8, **caractérisé en ce que** le guidage est formé par un trou oblong (22) dans lequel une saillie apte à être décalée par l'entraînement linéaire peut être déplacée, en particulier **en ce que** le trou oblong (22) présente à au moins une extrémité un tronçon de dépassement (104) dans lequel se trouve le chemin de dépassement de l'entraînement (18) après l'arrêt, le tronçon de dépassement (104) présentant un bord (102) délimitant le trou oblong (22) et formant un tronçon d'arc de cercle dont le centre se trouve sur l'axe médian imaginaire de l'axe de pivotement de couvercle (16).

10. Appareil de cuisson selon l'une des revendications 7 à 9, **caractérisé en ce que** le trou oblong (22) s'incline vers le bas à son extrémité associée au couvercle (14) relevé vers le haut et **en ce qu'**il est prévu un moyen d'amortissement (114) qui amortit un mouvement d'abaissement du couvercle (14) lorsque l'extrémité inclinée vers le bas est atteinte.

11. Appareil de cuisson selon l'une des revendications précédentes, **caractérisé en ce qu'**il est prévu un verrouillage de sécurité qui empêche la transmission d'une force mécanique pour l'ouverture et/ou la fermeture du couvercle (14) à l'axe de pivotement de poêlon (12).

12. Appareil de cuisson selon l'une des revendications 8 à 10 et selon la revendication 11, **caractérisé en ce que** le verrouillage de sécurité est formé par le trou oblong qui s'étend de manière courbe et présente un tronçon de verrouillage (50) qui s'étend transversalement à une pièce de transmission de force (34) côté couvercle, en particulier de manière linéaire, le couvercle ouvert (14) étant soutenu au niveau du tronçon de verrouillage (50) par la pièce de transmission de force (34).

13. Appareil de cuisson selon l'une des revendications précédentes, **caractérisé en ce que** l'axe de pivotement de couvercle (16) est couplé à un ressort à pression de gaz (34) par l'intermédiaire duquel un couple d'ouverture et/ou un couple de fermeture peut être exercé sur l'axe de pivotement de couvercle (16), le ressort à pression de gaz permettant un pivotement mécanique du couvercle (14).

14. Appareil de cuisson selon l'une des revendications précédentes, **caractérisé par** des butées (40, 42, 44), en particulier exclusivement par des butées rigides qui sont contactées dans un sens les unes après les autres dans le temps lors de l'actionnement de l'entraînement (18) de sorte que soit le couvercle (14), soit le poêlon (10) est pivoté.

15. Appareil de cuisson selon l'une des revendications précédentes, **caractérisé par** un moyen de sécurité intégré avec un contrôle de position du palier (20) et un arrêt direct de l'entraînement lorsque le palier (20) quitte sa position pendant la course (Xt), en particulier du poêlon (10) lors de l'abaissement.
